# EUROPÄISCHE PATENTSCHRIFT

(11) **EP 3 360 909 B1**
(45) Veröffentlichungstag und Bekanntmachung des Hinweises auf die Patenterteilung: **07.06.2023**
(21) Anmeldenummer: 17155822.4
(22) Anmeldetag: 13.02.2017
(51) Int. Cl.: C08G 12/32, C08J 9/00, F17C 13/00, B65D 81/38, F16L 59/14, C08J 9/04, F16L 58/04, F17C 3/04, C08G 101/00

(54) **VERWENDUNG VON MELAMIN/FORMALDEHYD-SCHAUMSTOFFEN ZUR THERMISCHEN ISOLIERUNG VON KRYOGENE FLÜSSIGKEITEN ENTHALTENDEN BEHÄLTERN UND ROHRLEITUNGEN**
USE OF MELAMINE/FORMALDEHYDE FOAMS FOR THERMAL ISOLATION OF CONTAINERS AND PIPELINES CONTAINING CRYOGENIC LIQUIDS
UTILISATION DE MOUSSES DE MÉLAMINE/ALDÉHYDE FORMIQUE POUR L'ISOLATION THERMIQUE DE RÉCIPIENTS ET DE TUYAUX CONTENANT DES LIQUIDES CRYOGÉNIQUES

(43) Veröffentlichungstag der Anmeldung: 15.08.2018
(73) Patentinhaber: BASF SE, 67056 Ludwigshafen am Rhein (DE)
(72) Erfinder: KOENIG, Alexander, 49448 Lemfoerde (DE); WEISSE, Sebastian Alexander, 67056 Ludwigshafen (DE); VATH, Bernhard, 67056 Ludwigshafen (DE)
(74) Vertreter: BASF IP Association

(56) Entgegenhaltungen:
- EP-A2- 0 683 349
- WO-A1-2007/003607

## Beschreibung

Die vorliegende Erfindung betrifft die Verwendung von Behältern oder Rohrleitungen mit einer Ummantelung aus einem Metamin/Formatdehyd-Schaumstoff zur Lagerung oder Förderung von kryogenen Flüssigkeiten, wobei der Melamin/Formaldehyd-Schaumstoff als Ummantelung auf die Außenwand der Behälter oder Rohrleitungen aufgebracht wird.

Offenzellige Schaumstoffe auf Basis eines Melamin/Formaldehyd-Kondensationsproduktes sind für verschiedene wärme- und schalldämmende Anwendungen in Gebäuden und Fahrzeugen bekannt.

Die EP-A 683 349 beschreibt Rohrschalen aus einem offenzelligen Melamin/Formaldehyd-Schaumstoff zur thermischen Isolierung von Rohren, welche mit heißen Flüssigkeiten oder Gasen beschickt werden. Zur Verhinderung einer Spaltbildung zwischen den einzelnen Rohrschalenstücken oder Faltenbildung bei der Oberflächenkaschierung sind die Rohrschalen in Umfangsrichtung mit einer Vielzahl von ringförmigen Einschnitten versehen, de senkrecht zur Rohrachse verlaufen.

Tankbehälter für den Transport von kryogenen Flüssigkeiten bestehen in der Regel aus einer doppelwandigen Ummantelung, die zur Isolierung evakuiert werden kann oder aus einer strukturgebenden Außenhülle aus Stahl oder glasfaserverstärkten Kunststoffen und einer wärmedämmenden Innenschicht, die sich aus mehreren Schichten oder Platten aufgebaut sein kann. Zur Wärmedämmung werden in der Regel Polymerschaumstoffe aus Polyurethanen eingesetzt (GB 1436109, GB 144029, US 3,993213 oder US 4,835,975).

Die WO 2007/003608 beschreibt einen Flüssigkeitsspeicher aus einem offenzelligen Schaumstoff auf Basis eines Melamin/Formaldehyd-Kondensationsproduktes mit einer Ummantelung aus Metall oder Kunststoff, sowie dessen Verwendung als Treibstofftank, Öltank, Tankcontainer für Tankfahrzeuge, Tankanhänger oder Tankschiffe, insbesondere zur Lagerung oder Transport von flüssigen Gefahrstoffen, umweltgefährdenden Stoffe oder kryogenen Flüssigkeiten.

Die WO 2007/003607 beschreibt ein Wärmedämmmaterial aus Melamin/Formaldehyd-Schaumstoff für kryogene Flüssigkeiten enthaltende Behälter oder Rohrleitungen aus einem offenzelligen Schaumstoff auf Basis eines Melamin/Formaldehyd-Kondensationsproduktes. Aufgrund der Elastizität des offenzelligen Schaumstoffes kann dieser auf einfache Weise in bereits vorgefertigte Behälterteile eingefügt werden.

Aufgabe der vorliegenden Erfindung war es, eine thermische Isolierung für Behältern, Rohrleitungen oder Armaturen, welche zur Lagerung oder Förderung von kryogenen Flüssigkeiten, insbesondere von verflüssigtem Sauerstoff oder Stickstoff, eingesetzt werden zu finden, die neben einer guten thermischen Isolierung eine hohe Temperaturbeständigkeit, Robustheit gegen Temperaturwechsel und hohe Flexibilität sowohl bei kryogener als auch bei Umgebungstemperatur aufweisen. Sie sollte ferne die Korrosion der Behälter oder Rohrleitung nicht begünstigen, nachträglich am Einsatzort bearbeitet und als Ummantelung auf die Außenwand der Behälter oder Rohrleitungen angebracht werden können.

Diese Aufgabe wurde gelöst durch die Verwendung von Behältern oder Rohrleitungen mit einer Ummantelung aus einem Melamin/Formaldehyd-Schaumstoff zur Lagerung oder Förderung von kryogenen Flüssigkeiten wobei der Melamin/Formaldehyd-Schaumstoffe als Ummantelung auf die Außenwand der Behälter oder Rohrleitungen aufgebracht und auf der dem Behälter oder der Rohrleitung abgewandten Seite mit einer Metallfolie mit einer Dicke im Bereich von 0,02 bis 5 mm kaschiert ist.

Die Melamin/Formaldehyd-Schaumstoffe sind in der Regel offenzellig, d.h. sie weisen eine Offenzelligkeit von mehr als 95%, insbesondere mehr als 98% auf. Die Melamin/Formaldehyd-Schaumstoffe weisen bevorzugt ein Raumgewicht nach EN ISO 845 im Bereich von 5 bis 30 kg/m³, besonders bevorzugt im Bereich von 6 bis 15 kg/m³ auf. Die Zellzahl liegt üblicherweise im Bereich von 50 bis 300 Zellen/25 mm. Die Zugfestigkeit nach ISO 1798 liegt bevorzugt im Bereich von 100 bis 150 kPa und die Bruchdehnung im Bereich von 8 bis 20%.

Zur Herstellung der Melamin/Formaldehyd-Schaumstoffe kann nach EP-A 071 672 oder EP-A 037 470 eine hochkonzentrierte, treibmittelhaltige Lösung oder Dispersion eines Melamin-Formaldehyd-Vorkondensates mit Heißluft, Wasserdampf oder durch Mikrowellenbestrahlung verschäumt und ausgehärtet werden. Derartige Schaumstoffe sind im Handel unter der Bezeichnung Basotect^{®} der Firma BASF SE erhältlich.

Die Dicke der Melamin/Formaldehyd-Schaumstoffe richtet sich nach dem Verwendungszweck und der gewünschten Isolierwirkung. In der Regel wird der Melamin/Formaldehyd-Schaumstoff in einer Dicke im Bereich von 5 bis 500 mm, bevorzugt im Bereich 10 bis 300 mm, eingesetzt.

Für die thermische Isolierung eines Rohrs, einer Armatur, eines Behälters als auch stationäre sowie transportable Tanks spielt die thermische Isolierfähigkeit des Dämmmaterials eine zentrale Rolle. Diese wird gemäß DIN EN 12667 als Lambda-Wert bezeichnet. Um die Isolierstärke in einem praktikablen als auch handhabbaren Schichtdicke zu halten, ist es wünschenswert, dass hier Isoliermaterialien eingesetzt werden, die einen niedrigen Lambdawert aufweisen. Vorzugsweise beträgt der Lambda-Wert des erfindungsgemäß eingesetzten Melamin/Formaldehyd-Schaumstoffes gemessen bei 10°C höchstens 35 mW/m*K. Gemessen bei -10°C beträgt der Lambda-Wert bevorzugt höchstens mW/m*K, bei -80°C höchstens 25 mW/m*K und bei -120°C höchstens 20 mW/m*K.

Desweitern weist der erfindungsgemäß eingesetzte Melamin/Formaldehyd-Schaumstoff eine hohe Temperaturbeständigkeit auf. Dies ist zum einen durch das Erhitzen der Oberfläche unter der Sonneneinstrahlung geschuldet. Zum anderen ist es gängige Praxis die Rohre, Armaturen, Behälter und Tanks in regelmäßigen Abständen von Verunreinigungen mittels Heißdampf unter Druck zu reinigen. Hierbei kann der Heißwasserdampf je nach Druck Temperaturen bis zu 220°C erreichen. Wäre die Temperaturbeständigkeit nicht gegeben, müsste die Isolierung bei der routinemäßigen Dampfreinigung entfernt und nach der Reinigung wieder montiert werden.

Eine weitere Anforderung an das thermische Isoliermaterial ist es, bei hohen und schnell verlaufenden Temperaturunterschieden nicht geschädigt zu werden. Schnellen Temperaturwechseln mit hohen Temperaturunterschieden können bei starren, spröden Materialien zu thermischen Spannungen und folglich zum Bruch führen. Nach einem Spannungsbruch ist die thermische Isolierwirkung nicht mehr sichergestellt und die Isolierung müsste dann erneuert werden. Diese Anforderung wird insbesondere bei Verwendung eines Melamin/Formaldehyd-Schaumstoffes mit einer Dichte im Bereich von 6 bis 15 kg/m³ erfüllt.

Die Flexibilität des erfindungsgemäß eingesetzten Melamin/Formaldehyd-Schaumstoffs ist auch wichtig um eine gute Passgenauigkeit mit komplexen Geometrien sicherzustellen. Selbst bei kryogenen Temperaturen bis zu -196°C bleibt der Schaumstoff elastisch. Eine Schädigung durch Versprödung tritt nicht auf.

Im Falle von Rohren, z. B. Rohrleitungen oder Armaturen oder von Behältern, z. b. stationäre sowie transportable Tanks, insbesondere bei metallischen Rohren oder Behältern aus austenitischen Stählen, kann es in Abhängigkeit zur Temperatur und zu den Temperaturwechseln zu Korrosion unter der Dämmung kommen. Insbesondere die Spannungsrißkorrosion wird durch eindringende Feuchte und korrosionsfördernden Stoffen, z.B. Chlorid- oder Sulfationen begünstigt. Der erfindungsgemäß eingesetzte Melamin/Formaldehyd-Schaumstoff weist daher bevorzugt weniger als 10 mg/kg auswaschbare Chloridionen gemäß VDI 2055-2 auf.

Melamin/Formaldehyd-Schaumstoffe leisten auch einen Beitrag zur Schallisolierung von Rohren, Armaturen und Behältern, die z. B. aufgrund des durchströmenden Mediums oder beweglicher Teile Schall emittieren. Hierbei werden die Schaumstoffe ein- oder mehrschalig mit oder ohne Entdröhnmatten oder Einlegeblechen kombiniert, um so im gewünschten Emissionsspektrum den Schall zu absorbieren.

Bei Isolierarbeiten ist es von entscheidender Bedeutung, den Dämmstoff vor Ort in Form bearbeiten zu können, z. B. Schneiden oder Stanzen, um komplexe Geometrien abbilden zu können. Die erfindungsgemäß eingesetzten Melamin/Formaldehyd-Schaumstoffe lassen sich leicht schneiden und dies ohne Freisetzung von Dämpfen, Gasen, Stäuben oder Fasern.

Bei der Isolierung von Rohren, Behältern und Tanks, die flüssigen Sauerstoff enthalten, besteht die Gefahr, dass im Falle einer Leckage Sauerstoff in die Isolierung strömt. Aufgrund der Reaktivität von Sauerstoff kann es in Gegenwart von organischem Material bei entsprechender Initiierung (Funke, Schlag) zu einer explosionsartigen Reaktion kommen. Diese Gefährdung ist bei dem erfindungsgemäß eingesetzten Melamin/Formaldehyd-Schaumstoff ausgeschlossen, da er den LOX-Test nach LOX BAM Standard besteht: "Testing of Reactivity with Liquid oxygen on mechanical impact".

Bevorzugt wird der erfindungsgemäß eingesetzte Melamin/Formaldehyd-Schaumstoff zusammen mit sogenannten Wasserdampfbremsen oder -sperren verwendet. Diese zumeist als Folien oder dünne Bleche verwendeten Materialien aus thermoplastischen, duroplastischen oder metallischen Materialien zeichnen sich dadurch aus, dass sie die Wasserdampfdiffusion in die Isolierung reduzieren oder unterbinden. Die Folien werden bezüglich ihrer Wasserdampfdiffusionswiderstandszahl p, gemäß der Messung nach DIN 52615, eingeteilt. Bevorzugt werden selbstklebende Folien und Bleche auch im Verbund mit oder auch ohne Verstärkung (z. B. Glasfasergelege) als auch mit oder ohne Beschichtung in einer Stärke, die eine diffusionsäquivalente Luftschichtdicke sd (sd = µ * s) > 1000 m aufweisen. Erfindungsgemäß werden Metallfolien, insbesondere Aluminumfolien auf den Melamin/Formaldehyd-Schaumstoff aufgebracht. Der Melamin/Formaldehyd-Schaumstoff ist auf der dem Behälter oder der Rohrleitung abgewandten Seite mit einer Metallfolie, insbesondere Aluminiumfolie, mit einer Dicke im Bereich von 0,02 bis 5 mm kaschiert. Weitere Eigenschaften sind in der AGI Q 112 zu finden. Besonders bevorzugt werden selbstklebende Al-Folien oder auch Albutylkautschukfolien in den Stärken von 0,025 bis 2,5 mm. Als besonders günstig hat es sich auch erwiesen, die Al-Folie überlappend auf Melamin/Formaldehyd-Schaumstoff aufzubringen. Somit können einzelne Schaumkörperteile, z. B. Rohrhalbschalen, miteinander verklebt werden.

Auch ist es möglich, den Melamin/Formaldehyd-Schaumstoff als hinterlüftete Isolierung um die Rohrleitung oder den Behälter zu installieren. Hinterlüftete Isolierungen werden insbesondere im Wechseltemperaturbetrieb eingesetzt, um im Fall von Undichtigkeiten auftretendes Kondenswasser über Löcher im unteren Bereich abzuführen. Der notwendige Luftspalt zwischen Melamin/Formaldehyd-Schaumstoff-Ummantelung und Außenwand des Behälters oder der Rohrleitung kann mit entsprechenden Abstandshaltern auf 1 bis 20 cm eingestellt werden.

Der Melamin/Formaldehyd-Schaumstoff mit oder ohne Dampfsperre kann zum einen trocken, d. h. ohne Klebstoffe, an die Rohre, Armaturen, Behälter als auch stationäre sowie transportable Tanks installiert werden. Hier kann es ggf. nützlich sein, Klebebänder zum Fixieren der Schaumkörper einzusetzen. Zum anderen ist auch der Einsatz von Klebern auf Elastomer, Polyurethan, Epoxy, Bitumen, Acrylat-Basis oder anderen möglich, soweit diese auch im vorgegebenen Temperatur-Bereich einsetzbar sind.

Auch eine Kombination des Melamin/Formaldehyd-Schaumstoffs mit anderen Isolationsmaterialien, beispielsweise PU/PIR-Schaumstoffe, Elastomere-Schaumstoffe, Styrol-Schaumstoffe, Glasschaum, Mineralwolle, Perlit und Aerogel, ist möglich. Dies ist insbesondere sinnvoll, wenn besondere Eigenschaften kombiniert werden müssen, z. B. Temperaturstabilität, hohe Isolationswirkung, etc..

Der Melamin/Formaldehyd-Schaumstoff wird erfindungsgemäß als Isoliermaterial für Rohre, Armaturen, Behälter und stationäre sowie transportable Tanks eingesetzt, deren Medien einen Siedepunkt im kryogenen Temperaturbereich aufweisen. Als kryogener Temperaturbereich im Sinne der Erfindung wird ein Temperaturbereich zwischen - 273° bis +15°C, insbesondere im Bereich von - 270° bis - 30°C verstanden. Als kryogene Flüssigkeiten kommen insbesondere verflüssigte Gase in Betracht, beispielsweise verflüssigte Luft (-195°C), Sauerstoff (-183 °C), Stickstoff (-196 °C), Wasserstoff (-253 °C) sowie die Edelgase Helium (--269 °C), Argon (-186 °C), Neon (-246 °C), Krypton (-153 °C), Xenon (-108 °C). Des Weiteren können diese auch Treibstoffe oder Prozessgase sein wie Erdgas (-161 °C), Autogas, Methan (-162°C), Ethan (-183°C), Propan (-42°C), Ethylen (-169°C), Propylen (-48°C), CO₂ (-79°C), H₂S (-60°C) oder O₃ (-112 °C).

Die erfindungsgemäße Verwendung von Melamin/Formaldehyd-Schaumstoffen zur thermischen Isolierung von Behältern oder Rohrleitungen
- Stellt eine gute thermische Isolierung sicher (Lambda-Wert ≤ 35 mW/m*K)
- Weist eine maximale Temperaturbeständigkeit von mind. 220 °C auf
- Ist robust gegen Temperaturwechsel
- Ist bei kryogener als auch Umgebungstemperatur flexibel
- begünstigt keine Korrosion
- lässt sich vor Ort gut bearbeiten
- ist für den Einsatz mit flüssigen Sauerstoff geeignet (LOX-Test)

### Beispiele

### Beispiel 1: LOX-Test mit Basotect^{®} G+

Ein offenzelliger Melaminharz/Formaldehyd-Schaumstoff (Basotect^{®} G+) mit einem Raumgewicht von ca. 9 kg/m³ wurde nach dem BAM-Standard: "Testing of Reactivity with Liquid oxygen on mechanical impact" (LOX-Test) auf seine Reaktivität gegenüber flüssigem Sauerstoff getestet. Bei einer Fallhöhe von 1.00 m (Impaktenergie 750 Nm) wurde in 10 unabhängigen Versuchen keine Reaktion mit flüssigem Sauerstoff beobachtet.

## Patentansprüche

1. Verwendung von Behältern oder Rohrleitungen mit einer Ummantelung aus einem Melamin/Formaldehyd-Schaumstoff zur Lagerung oder Förderung von kryogenen Flüssigkeiten, **dadurch gekennzeichnet, dass** der Melamin/Formaldehyd-Schaumstoff als Ummantelung auf die Außenwand der Behälter oder Rohrleitungen aufgebracht und auf der dem Behälter oder der Rohrleitung abgewandten Seite mit einer Metallfolie mit einer Dicke im Bereich von 0,02 bis 5 mm kaschiert ist.

2. Verwendung nach Anspruch 1, **dadurch gekennzeichnet, dass** der Melamin/Formaldehyd-Schaumstoff eine Dichte im Bereich von 5 bis 30 kg/m³ aufweist.

3. Verwendung nach einem der Ansprüche 1 oder 2, **dadurch gekennzeichnet, dass** der Melamin/Formaldehyd-Schaumstoff in einer Dicke im Bereich von 5 bis 500 mm eingesetzt wird.

4. Verwendung nach einem der Ansprüche 1 bis 3, **dadurch gekennzeichnet, dass** der Melamin/Formaldehyd-Schaumstoff weniger als 10 mg/kg auswaschbare Chloridionen gemäß VDI 2055-2 aufweist.

5. Verwendung nach einem der Ansprüche 1 bis 4, **dadurch gekennzeichnet, dass** als kryogene Flüssigkeit verflüssigte Gase mit einem Siedepunkt im Bereich von -270° bis +15°C eingesetzt werden.

6. Verwendung nach einem der Ansprüche 1 bis 4, **dadurch gekennzeichnet, dass** als kryogene Flüssigkeit verflüssigte Luft, Sauerstoff, Stickstoff, Wasserstoff, Helium, Argon, Neon, Xenon oder Mischungen davon eingesetzt werden.

## Claims

1. The use of containers or pipelines having a cladding composed of a melamine-formaldehyde foam for the storage or transport of cryogenic liquids, wherein the melamine-formaldehyde foam is applied as a cladding to the outer wall of the containers or pipelines and is lined on the side facing away from the container or the pipeline with a metal foil having a thickness in the range from 0.02 to 5 mm.

2. The use according to claim 1, wherein the melamine-formaldehyde foam has a density in the range from 5 to 30 kg/m³.

3. The use according to either of claims 1 and 2, wherein the melamine-formaldehyde foam is used in a thickness in the range from 5 to 500 mm.

4. The use according to any of claims 1 to 3, wherein the melamine-formaldehyde foam contains less than 10 mg/kg of leachable chloride ions according to VDI 2055-2.

5. The use according to any of claims 1 to 4, wherein cryogenic liquid used comprises liquefied gases having a boiling point in the range from -270° to +15°C.

6. The use according to any of claims 1 to 4, wherein cryogenic liquid used comprises liquefied air, oxygen, nitrogen, hydrogen, helium, argon, neon, xenon or mixtures thereof.

## Revendications

1. Utilisation de récipients ou de conduites comportant une gaine composée d'une mousse de mélamine/formaldéhyde pour le stockage ou le transport de liquides cryogéniques, **caractérisée en ce que** la mousse de mélamine/formaldéhyde est appliquée en tant que gaine sur la paroi extérieure des récipients ou des conduites et est contrecollée sur le côté opposé au récipient ou à la conduite avec une feuille métallique dotée d'une épaisseur dans la plage de 0,02 à 5 mm.

2. Utilisation selon la revendication 1, **caractérisée en ce que** la mousse de mélamine/formaldéhyde présente une densité dans la plage de 5 à 30 kg/m³.

3. Utilisation selon l'une quelconque des revendications 1 et 2, **caractérisée en ce que** la mousse de mélamine/formaldéhyde présente une épaisseur dans la plage de 5 à 500 mm.

4. Utilisation selon l'une quelconque des revendications 1 à 3, **caractérisée en ce que** la mousse de mélamine/formaldéhyde présente moins de 10 mg/kg d'ions chlorure lessivables selon la norme VDI 2055-2.

5. Utilisation selon l'une quelconque des revendications 1 à 4, **caractérisée en ce que** des gaz liquéfiés dotés d'un point d'ébullition dans la plage de -270° à +15 °C sont utilisés en tant que liquide cryogénique.

6. Utilisation selon l'une quelconque des revendications 1 à 4, **caractérisée en ce que** de l'air, de l'oxygène, de l'azote, de l'hydrogène, de l'hélium, de l'argon, du néon, du xénon liquéfiés ou des mélanges correspondants sont utilisés en tant que liquide cryogénique.
